# EUROPÄISCHE PATENTANMELDUNG

(11) **EP 2 280 158 A2**
(43) Veröffentlichungstag der Anmeldung: **02.02.2011**
(21) Anmeldenummer: 10007051.5
(22) Anmeldetag: 08.07.2010
(51) Int. Cl.: F02G 5/04

(54) **Verfahren und Vorrichtung zur verbesserten Energieausnutzung der Wärmeenergie von Brennkraftmaschinen**

(30) Priorität: 31.07.2009 DE 102009035522
(71) Anmelder: IAV GmbH Ingenieurgesellschaft Auto und Verkehr, 10587 Berlin (DE)
(72) Erfinder: Ambrosius, Volker, 01448 Radebeul (DE); Arnold, Thomas, 09366 Stollberg (DE); Neukirchner, Heiko, 09125 Chemnitz (DE); Richter, Uwe, 09125 Chemnitz (DE); Ross, Jörg, Dr.-Ing., 41050 Castelvetro (IT)
(74) Vertreter: Buss, Fritz Gerd

(57) **Zusammenfassung**

Die Erfindung betrifft ein Verfahren und eine Vorrichtung zur verbesserten Energieausnutzung der Wärmeenergie von Brennkraftmaschinen.

Der Erfindung liegt die Aufgabe zugrunde, ein Verfahren und eine dazugehörige Vorrichtung zur verbesserten Energieausnutzung der Wärmeenergie von Brennkraftmaschinen zu schaffen, mit dem/der die anfallende Wärmeenergie auch bei unterschiedlichen Betriebsbedingungen der Brennkraftmaschine besser ausgenutzt werden kann ohne dass dabei die Wirkungsweise der der Brennkraftmaschine nachgeschalteten Aggregate beeinträchtigt wird.

Durch die Anordnung von schaltbaren Wegeventilen, mit dem ein Arbeitsmedium regelbar an verschiedenen Stellen des Abgasstranges der Brennkraftmaschine zugeführt werden kann, erfolgt eine optimale Wärmeübertragung der Wärmeenergie der Brennkraftmaschine an das Arbeitsmedium.

## Beschreibung

Die Erfindung betrifft ein Verfahren zur verbesserten Energieausnutzung der Wärmeenergie von Brennkraftmaschinen mit den im Oberbegriff des Patentanspruches 1 genannten Merkmalen und eine dazugehörige Vorrichtung mit den im Oberbegriff des Patentanspruches 11 genannten Merkmalen.

Es ist bekannt, bei Kraftfahrzeugen die bei der Verbrennung der Kraftstoffe in der in der Brennkraftmaschine entstehende Wärmeenergie durch entsprechende Wärmerückgewinnungssysteme zu nutzen. So wird die Abwärme der Brennkraftmaschine durch den Einsatz von Expandern in mechanische Energie umgewandelt. So ist es gemäß der DE 601 13 063 T2 bekannt, die Wärmeenergie der Abgaswärme unmittelbar nach der Brennkraftmaschine in einem Wärmetauscher an ein Arbeitsmedium zu übertragen und mit dem überhitzten Dampf einen nachgeschalteten Expander zu betreiben. Der Expander steht über Kupplungen und ein Getriebe mit dem Antrieb des Fahrzeuges und/oder mit einem Generator/Motor in Wirkverbindung, so dass durch den Expander das Fahrzeug und/oder der Generator betrieben werden kann.

Aus der DE 10 2007 050 259 A1 ist eine aufgeladene Brennkraftmaschine bekannt, die über einen ersten im Zylinderkopf integrierten Kühlmittelkreislauf verfügt. Dabei ist der Kühlmittelmantel teilweise um den Abgaskrümmer angeordnet. Durch den Kühlmittelkreislauf wird als Bauteilschutz der Abgaskrümmer der Brennkraftmaschine gekühlt, wobei das Kühlmittel in eine dampfförmige Phase überführt wird. Das dampfförmige Kühlmittel wird einer Expansionsmaschine zum Antrieb zugeführt, wobei die Welle der Expansionsmaschine zur Leistungsübertragung mit der Kurbelwelle der Brennkraftmaschine verbunden ist. Das in der Expansionsmaschine entspannte dampfförmige Kühlmittel wird zur weiteren Abkühlung einem nachgeschaltetem Kondensator zugeführt. Das kondensierte Kühlmittel wird dann im Kreislauf wieder dem Zylinderkopf der Brennkraftmaschine zugeführt.

Aus der DE 33 26 992 C1 ist ein Verfahren zur Rückgewinnung der Verlustenergie von Brennkraftmaschinen bekannt, bei der eine Abwärmeturbineneinheit über ein Getriebe und eine Kupplung mit der Kurbelwelle der Brennkraftmaschine verbunden ist. Zum Betreiben der Abwärmeturbineneinheit wird ein im Kreislauf geführtes flüssiges Medium durch die Abgaswärme der Brennkraftmaschine überhitzt. Der Dampfüberhitzer, dem durch die Abgase der Abgasleitung vorgewärmtes Arbeitsmedium zugeführt wird, ist zu Überhitzung des vorgewärmten Arbeitsmediums am Abgaskrümmer angeordnet. Der Abwärmeturbineneinheit sind ein Kondensator und eine Pumpe zur Förderung des flüssigen Mediums nachgeschaltet.

Nachteilig bei dem bekannten Stand der Technik ist, dass die Systeme zur Wärmerückgewinnung nicht regelbar sind, so dass in Zeiten in denen kein Dampfdruck benötigt, jedoch aber produziert wird, der Dampf über den Kondensator rückkondensiert werden muss, was zwangsläufig zu einer Energievernichtung führt. Ein weiterer Nachteil besteht darin, dass die dem Katalysator zugeführten Abgase bereits soweit abgekühlt sind, das dadurch die Wirkungsfunktion des Katalysators beeinträchtigt wird. Besonders in der Anheizphase, bei dem der Katalysator auf Betriebstemperaturen erhitzt wird, ist die dem Katalysator zugeführte Abgastemperatur zu gering, so dass eine relativ lange Zeit benötigt wird um den Katalysator auf Betriebstemperaturen zu erwärmen. Die Reinigungseffektivität des Katalysators wird dadurch stark beeinträchtigt.

Der Erfindung liegt die Aufgabe zugrunde, ein Verfahren und eine dazugehörige Vorrichtung zur verbesserten Energieausnutzung der Wärmeenergie von Brennkraftmaschinen zu schaffen, mit dem/der die anfallende Wärmeenergie auch bei unterschiedlichen Betriebsbedingungen der Brennkraftmaschine besser ausgenutzt werden kann ohne dass dabei die Wirkungsweise der, der Brennkraftmaschine nachgeschalteten Aggregate beeinträchtigt wird.

Diese Aufgabe wird entsprechend dem Verfahren erfindungsgemäß durch die kennzeichnenden Merkmale des Patentanspruches 1 und entsprechend der Vorrichtung erfindungsgemäß durch die kennzeichnenden Merkmale des Patentanspruches 11 gelöst.

Durch die Anordnung von schaltbaren Wegeventilen, mit dem ein Arbeitsmedium regelbar an verschiedenen Stellen des Abgasstranges der Brennkraftmaschine zugeführt werden kann, erfolgt eine optimale Wärmeübertragung der Wärmeenergie der Brennkraftmaschine an das Arbeitsmedium, wobei die volle Funktionsfähigkeit der im Abgasstrang der Brennkraftmaschine angeordneten Aggregate aufrecht erhalten wird. Erfindungsgemäß wird dabei das durch die Abgase nach dem Hauptkatalysator erwärmte Arbeitsmedium über ein schaltbares erstes Wegeventil wahlweise einem Wärmeübertrager zur Wärmeübertragung der Wärmeenergie der unmittelbar aus der Brennkraftmaschine austretenden heißen Abgase an das Arbeitsmedium zur Kühlung der Bauteile der Brennkraftmaschine und zur gleichzeitigen Überhitzung des Arbeitsmediums und/oder unter teilweiser Umgehung des Wärmetauschers einer der dem Wärmetauschers in Strömungsrichtung des Arbeitsmediums nachgeschalteten zweiten schaltbaren Wegeventil zugeführt. Über das zweite schaltbare Wegeventil kann das dem zweiten Wegeventil zugeführte Arbeitsmedium regelbar einem dritten schaltbaren Wegeventil und/oder einem Wärmespeicher und/oder das im Wärmespeiche vorhandene Arbeitsmedium dem dritten Wegeventil zugeführt werden. Das dem dritten Wegeventil zugeführte Arbeitsmedium wird schaltbar wahlweise einem Expander zur Nutzung und Entspannung der im Arbeitsmedium enthaltene Wärmeenergie und/oder einem Kondensator zur Abkühlung des Arbeitsmediums und/oder dem im Abgasstrom der Brennkraftmaschine nach einem Hauptkatalysator befindlichen Wärmeübertrager zugeführt.

Der Vorteil der erfindungsgemäßen Lösung besteht darin, dass bei unterschiedlichen Motorbetrieb, wie Kaltstart, Fahrbetrieb oder kurzer Fahrzeugstopp, durch die regelbare Arbeitsmediumführung ein optimaler Bauteilschutz des Abgaskrümmers der Brennkraftmaschine und des nachgeschalteten Abgasturboladers erfolgt, ohne dass dabei die Wirkungsweise der der Brennkraftmaschine nachgeschalteten Aggregate, wie Abgasturbolader und Katalysator, beeinträchtigt wird. Ein weiterer Vorteil der erfindungsgemäßen Lösung besteht darin, dass durch den Einsatz eines Wärmespeichers zurzeit nicht benötigte Dampfenergie gespeichert und bei Bedarf genutzt werden kann. Dadurch wird die Energieausnutzung der von der Brennkraftmaschine abgegebenen Wärmeenergie optimal genutzt.

Weitere vorteilhafte Ausgestaltungen sind in den Unteransprüchen beschrieben, sie werden in der Beschreibung zusammen mit ihren Wirkungen erläutert.

Anhand von Zeichnungen wird die Erfindung nachfolgend an Ausführungsbeispielen näher beschrieben. In den dazugehörigen Zeichnungen zeigen:
- Fig. 1:: eine schematische Darstellung der erfindungsgemäßen Lösung zur E- nergieausnutzung der anfallenden Wärmeenergie von Brennkraftma- schinen,
- Fig. 2:: eine Variante der erfindungsgemäßen Lösung und
- Fig. 3:: eine weitere Ausführungsform der erfindungsgemäßen Lösung.

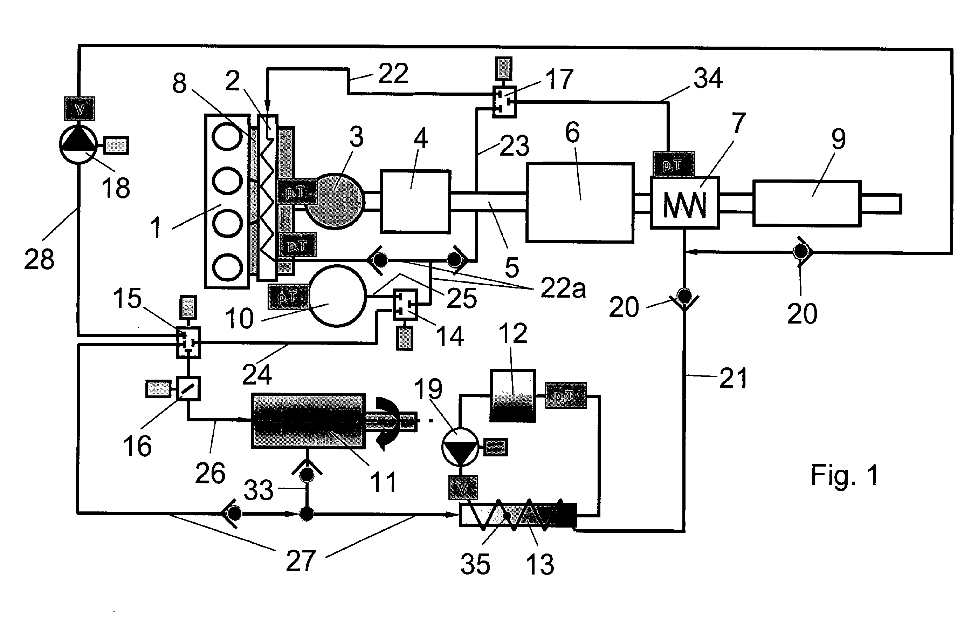

Die erfindungsgemäße Lösung wird erläutert an einer aufgeladenen Brennkraftmaschine 1. Die in der Figur 1 dargestellte Brennkraftmaschine 1 ist in bekannter Weise über einem Abgaskrümmer 8 mit einer Abgasleitung 5 verbunden. In der Abgasleitung 5 sind ein Abgasturbolader 3 und wenigstens ein Vorkatalysator 4 und ein Hauptkatalysator 6 sowie ein nachgeschalteter Nachschalldämpfer 9 angeordnet. Im Bereich des Abgaskrümmers 8 der Brennkraftmaschine 1 ist ein mit einem Arbeitsmedium durchströmter Wärmeübertrager 2 angeordnet.

Das in einem Speicher 12 befindliche kalte Arbeitsmedium wird in einem nachfolgend beschriebenen Kreislauf durch entsprechende druckerzeugende und Volumen einstellbare Pumpen 18 und 19 sowie durch einen Verdichter 31 durch die Leitungen geführt. Das Arbeitsmedium für den Wärmeaustausch kann in bekannter Weise Wasser, in Wasser gelöstes Ammoniak, Ethanol, Methanol oder CO₂ oder eine Lösung von Benzin und Öl oder dergleichen sein. Das kalte Arbeitsmedium aus dem Speicher 12 wird mittels der Pumpe 19 einem Kondensator 13 zugeführt. Dabei ist eine Kühlleitung 35 um den Kondensator 13 zur Kühlung des dem Kondensator 13 über eine Bypassleitung 27 zugeführten heißen Arbeitsmediums angeordnet. Gemäß Figur 1 wird das durch den Kondensator 13 vorgewärmte Arbeitsmedium über eine Leitung 21 einem Wärmeübertrager 7 zugeführt. Der Wärmeübertrager 7 ist in der Abgasleitung 5 zwischen dem Hauptkatalysator 6 und dem Nachschalldämpfer 9 angeordnet und wird von den Abgasen der Brennkraftmaschine 1 durchströmt.

In dem Wärmeübertrager 7 erfolgt eine Wärmeübertragung der Wärmeenergie der Abgase an das dem Wärmeübertrager 7 zugeführte Arbeitsmedium, wobei dieses weiter aufgeheizt wird. Das aufgeheizte Arbeitsmedium wird vom Wärmeübertrager 7 über eine Leitung 34 einem ersten schaltbaren Wegeventil 17 zugeführt. Das erste Wegeventil 17 besitzt zwei Leitungsausgänge 22 und 23 über die das Arbeitsmedium weitergeleitet wird. Dabei kann das erste Wegeventil 17 derart geschaltet werden, dass das Arbeitsmedium nur der Leitung 22 oder nur der Bypassleitung 23 oder jeweils ein einstellbarer Teilstrom beiden Leitungen 22 und 23 zuführt wird.

Die Leitung 22 mündet in den Wärmeübertrager 2 und verlässt diesen als Dampfleitung 22a, die in mit einem zweiten schaltbaren Wegeventil 14 verbunden ist. Vor dem Eintritt der Dampfleitung 22a in das zweite Wegeventil 14 mündet die vom ersten Wegeventil 17 kommende Bypassleitung 23 in die Dampfleitung 22a. In der Dampfleitung 22a und in der Bypassleitung 23 ist jeweils ein Rückschlagventil 20 zur Verhinderung einer Fluidrückströmung zum Wärmeübertrager 2 und zum Wegeventil 17 angeordnet. Das zweite schaltbare Wegeventil 14 besitzt zwei Ventilausgänge, wobei eine Verbindungsleitung 25 in einen Wärmespeicher 10 und eine Leitung 24 in ein drittes schaltbares Wegeventil 15 mündet. Das zweite Wegeventil 14 kann derart geschaltet werden, dass die dem Wegeventil 14 zugeführte Arbeitsmediummenge dem Wärmespeicher 10 und/oder dem dritten Wegeventil 15 zugeführt wird. Das zweite Wegeventil 14 kann auch so geschaltet werden, dass nur das im Wärmespeicher 10 gespeicherte Arbeitsmedium dem Wegeventil 15 oder eine einstellbare Teilmenge des im Wärmespeicher 10 gespeicherten Arbeitsmediums und das dem Wegeventil 14 zugeführte Arbeitsmedium dem dritten Wegeventil 15 zugeführt wird.

Das schaltbare dritte Wegeventil 15 besitzt drei Ventilausgänge, die jeweils durch eine Rückführleitung 28, eine Dampfleitung 26 und der Bypassleitung 27 gebildet werden. Das Wegeventil 15 ist dabei so schaltbar, dass das über die Leitung 24 zugeführte Arbeitsmedium der Rückführleitung 28 und/oder der Dampfleitung 26 und/oder der Bypassleitung 27 zugeführt wird. Die Rückführleitung 28 mündet unmittelbar vor dem Wärmeübertrager 7 in die Leitung 21, wobei jeweils in der Leitung 21 und der Rückführleitung 28 ein Rückschlagventil 20 angeordnet ist. In der Rückführleitung 28 ist eine regelbare druckerzeugende Pumpe 18 angeordnet.

Die Dampfleitung 26 mündet in einen Expander 11, in der das dampfförmige Arbeitsmedium unter Erzeugung mechanischer Arbeit entspannt wird. In der Dampfleitung 26 ist ein Regelventil 16 angeordnet, mit dem der Lastpunkt des Expanders 11, beispielsweise zur Drehzahlanpassung an den Verbrennungsmotor, geregelt wird. Die mechanische Arbeit des Expanders 11 kann wahlweise für verschiedene mechanische Antriebe, zum Antrieb eines Generators zur Stromgewinnung oder zur direkten Einleitung in den Antriebsstrang genutzt werden. Vom Expander 11 wird über eine Rückführleitung 33 das entspannte unter Druck stehende Arbeitsmedium im nassdampfförmigen Zustand über ein Rückschlagventil 20 zum Kondensator 13 geleitet, wobei die Rückführleitung 33 in die Bypassleitung 27 mündet.

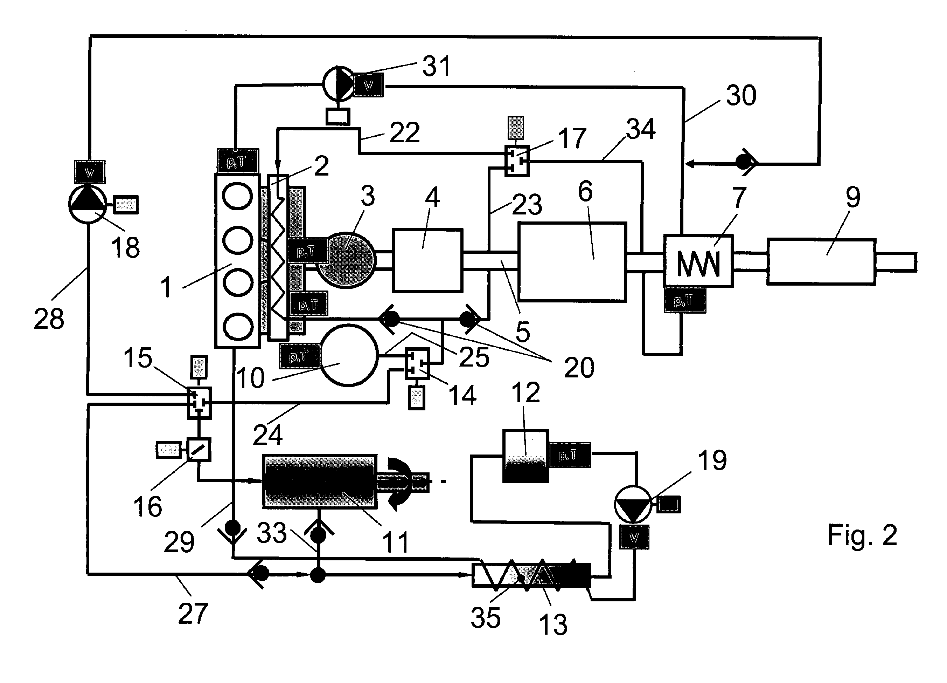

Die in der Figur 2 dargestellte Variante unterscheidet sich gegenüber der oben beschriebenen Variante dadurch, dass das durch den Kondensator 13 vorgewärmte Arbeitsmedium über eine Leitung 29 der Brennkraftmaschine 1 zur Kühlung der Zylinder und/oder des Zylinderkopfes der Brennkraftmaschine 1 zugeführt wird. Das der Brennkraftmaschine 1 zur Kühlung zugeführte Arbeitsmedium wird über eine Leitung 30 dem Wärmeübertrager 7 zugeführt. Unmittelbar vor dem Wärmeübertrager 7 mündet die Rückführleitung 28 in die Leitung 30. In der Leitung 30 ist ein einstellbarer Verdichter 31 zur Verdichtung des Arbeitsmediums auf Systemdruck angeordnet.

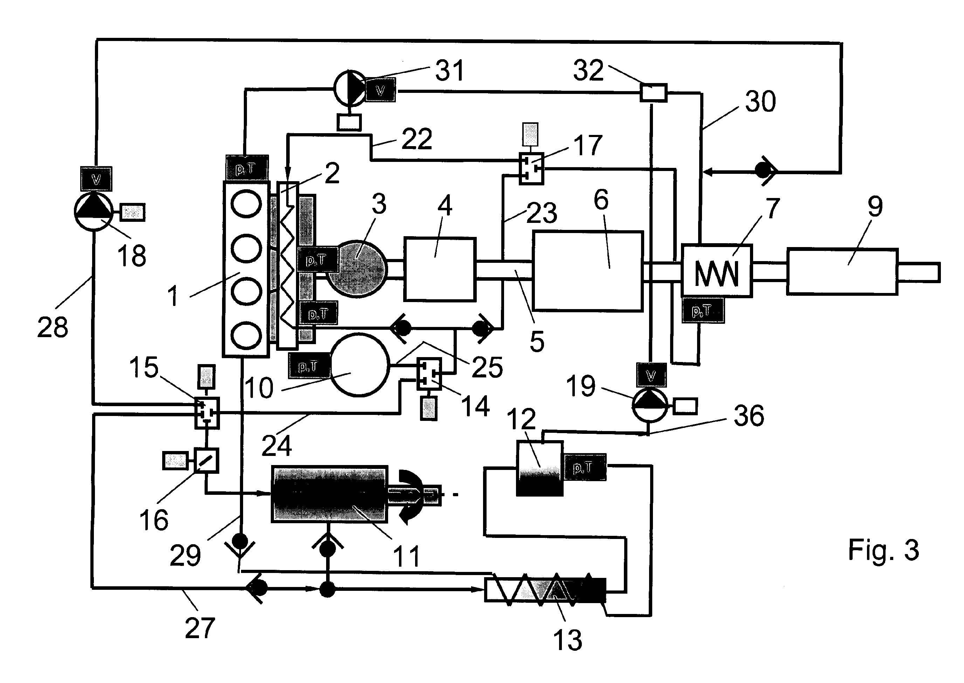

Die in der Figur 3 dargestellte Variante unterscheidet sich gegenüber der Variante gemäß Figur 2 dadurch, dass in der Leitung zwischen Brennkraftmaschine 1 und Wärmeübertrager 7 in Strömungsrichtung des Arbeitsmediums nach dem Verdichter 31 ein Injektor 32 angeordnet ist, der über eine Leitung 36 mit dem Speicher 12 verbunden ist. In der Leitung 36 ist eine regelbare Pumpe zur Förderung des Arbeitsmediums angeordnet. Durch den Einsatz des Injektors 32 und der Zuführung eines kälteren flüssigen Arbeitsmediums kann die benötigte Verdichterleistung des Verdichters 31 reduziert werden. Außerdem wird durch die Zuführung des kälteren Arbeitsmediums vor dem Wärmeübertrager 7 die Temperatur des dem Wärmeübertrager 2 zugeführten Arbeitsmediums regelbar eingestellt, so dass auch ein optimaler Bauteilschutz des Abgaskrümmers 8 und des Turboladers 3 erfolgen kann. Der Vorteil der in Figur 2 und 3 dargestellten Varianten besteht darin, dass für die Kühlung der Zylinder und/oder des Zylinderkopfes der Brennkraftmaschine 1 und der Nutzung der von der Brennkraftmaschine 1 abgegebenen Wärmeenergie nur ein Arbeitsmediumkreislauf benötigt wird.

Die Wirkungsweise der erfindungsgemäßen Lösung wird anhand der in der Figur 1 dargestellten Variante erläutert. Die Unterschiede der in Figur 2 und 3 dargestellten Varianten wurden bereits erläutert.

Zunächst wird die Wirkungsweise bei einem normalen Fahrbetrieb beschrieben, bei dem alle Aggregate die entsprechende Betriebstemperatur aufweisen.

Ausgehend von dem im Speicher 12 vorliegenden flüssigen Arbeitsmedium, das unter einem Druck von p₀ vorliegt, erfolgt mit Hilfe der Volumenstrom regelbaren Pumpe 19 der Druckaufbau auf den Systemdruck pₘₐₓ. Die Pumpe 19 fördert das flüssige unter Systemdruck stehende Arbeitsmedium über den Kondensator 13 entweder über die Leitung 21 direkt zu dem Wärmeübertrager 7 oder über die Brennkraftmaschine 1 und die Leitung 30 zu dem Wärmeübertrager 7. Nachdem das Arbeitsmedium den ersten Wärmeübertrager 7 passiert hat, wo es vollständig verdampft und zusätzlich überhitzt wurde, gelangt es zum ersten Wegeventil 17. Durch das erste Wegeventil 17 wird bedarfsgerecht das dampfförmige Arbeitsmedium entweder vollständig oder teilweise durch die Leitung 22 zu Zwecken des Bauteilschutzes des Abgaskrümmers 8 und des Abgasturboladers 3 zum Wärmeübertrager 2 geleitet. Entsprechend den ermittelten Temperaturverhältnissen am Abgaskrümmer 8 und am Abgasturbolader 3 wird die Menge des dem Wärmeübertrager 2 zugeführten Arbeitsmediums regelbar eingestellt. Das nicht dem Wärmeübertrager 2 zugeführte Arbeitsmedium wird durch das Wegeventil 17 über die Leitung 23 dem zweiten Wegeventil 14 zugeführt.

Mit dem zweiten Wegeventil 14 kann gesteuert werden, ob das dampfförmige, vollständig überhitzte Arbeitsmedium, entweder über Leitung 24 an das dritte Wegeventil 15 oder aber in den Wärmespeicher 10 geleitet wird. Auch die Entleerung des Wärmespeichers 10 erfolgt über das zweite Wegeventil 14. Der Vorteil der einstellbaren Regelung des Wegeventils 14 ist, dass in Zeiten in denen kein Dampfdruck benötigt, jedoch aber produziert wird, der Dampf nicht über den Kondensator 13 rückkondensiert werden muss, was eine Energievernichtung bedeuten würde, sondern im Wärmespeicher 10 gespeichert wird. In Zeiten in denen weniger Dampf produziert als abgerufen wird, kann über den Wärmespeicher 10 der Mangel ausgeglichen werden, in dem das dampfförmige Arbeitsmedium aus dem Wärmespeicher 10 dem Expander 11 zugeführt wird. Auf diese Art ist auch eine bedarfsgerechtere Steuerung des Expanders 11 möglich.

Das dritte Wegeventil 15 kann im Notfall (Notbremsung, etc.) das dampfförmige Arbeitsmedium ohne Zeitverzug über die Bypassleitung 27 am Expander 11 vorbei direkt zum Kondensator 11 leiten, wo die Rückkondensation zum flüssigen Zustand stattfindet und es anschließend dem Speicher 12 zugeführt wird. Im normalen Arbeitsbetrieb leitet das dritte Wegeventil 15 das dampfförmige Arbeitsmedium über das Regelventil 16 zum Expander 11, in dem das dampfförmige Arbeitsmedium unter Erzeugung mechanischer Arbeit entspannt wird. Mit dem Regelventil 16 wird der Lastpunkt des Expanders 11 eingestellt. Vom Expander 11 wird das entspannte unter dem Druck p_{end} stehende Arbeitsmedium im nassdampfförmigen Zustand über das in der Rückführungsleitung 33 angeordnete Rückschlagventil 20 zum Kondensator 13 geleitet. Das Rückschlagventil 20 verhindert, dass das Arbeitsmedium aus dem Bypassleitung 27 in den Expander 11 gelangen kann. Im Kondensator wird das nassdampfförmige Arbeitsmedium isobar kondensiert und anschließend im flüssigen Zustand dem Speicher 13 zugeführt, von wo aus der Kreislauf von Neuem beginnt.

Im Weiteren wird die erfindungsgemäße Lösung anhand eines kurzen Fahrzeugstop, wie Ampelstop, Einkauf oder dergleichen beschrieben.

Da bei kurzem Motorstillstand (Ampelphase, etc.) die Brennkraftmaschine 1 und damit die nachgeschalteten Aggregate auszukühlen beginnen, sinkt aufgrund der Wärmeabstrahlung die Temperatur und damit der Druck des Arbeitsmediums im System. Um das Arbeitsmedium im Wärmespeicher 10 jedoch nicht über die Bypassleitung 27 zum Kondensator 13 entleeren zu müssen und so wertvolle Wärmeenergie zu verschwenden, wird das Arbeitsmedium aus dem Wärmespeicher 10 durch die einstellbaren Wegeventil 14 und 15 der Rückführleitung 28 zugeführt. Die in der Rückführleitung 28 angeordnete Pumpe 18 fördert das dampfförmige Arbeitsmedium über das Rückschlagventil 20 zurück zum Wärmeübertrager 7. Im Wärmeübertrager 7 wird dem rückgeführten dampfförmigen Arbeitsmedium die Restwärme des Wärmeübertragers 7 bzw. bei Neustart der Brennkraftmaschine 1 die Wärmeenergie des Abgases zugeführt. Die Pumpe 19 ist in diesem Fall abgestellt, so dass dem Wärmeübertrager 7 kein kaltes Arbeitsmedium aus dem Speicher 12 zugeführt wird. Durch Rückführung des Arbeitsmediums über die Rückführleitung 28 zum Wärmeübertrager 7 stellt sich die gewünschte Dampftemperatur und damit der gewünschte Dampfdruck wieder ein. Anschließend wird das dampfförmige Arbeitsmedium zum ersten Wegeventil 17 geleitet. Durch das Wegeventil 17 wird bedarfsgerecht das dampfförmige Arbeitsmedium entweder vollständig oder teilweise durch Leitung 22 zu Zwecken des Bauteilschutzes zum Wärmeübertrager 2 oder aber vollständig zum zweiten Wegeventil 14 geleitet. Solange die gewünschte Dampftemperatur und der Dampfdruck des Arbeitsmediums im System noch nicht erreicht sind, wird das Arbeitsmedium aus dem Wärmespeicher 10 durch die Wegeventile 14 und 15 wieder zu dem Wärmeübertrager 7 geleitet. Erst wenn Dampftemperatur und -Druck die gewünschten Werte erreichen werden die Wegeventile 17, 14 und 15 so geschaltet, dass wieder eine Befüllung des Wärmespeichers 10 und/oder die Zuführung des Arbeitsmediums zum Expanders 11 erfolgt und somit wieder der oben beschriebene normale Betrieb aufgenommen wird. Gleichzeitig beginnt die Pumpe 19 damit über die Leitung 21 dem Kreislauf neues Arbeitsmedium zu zuführen.

Sollte die Temperatur aufgrund eines zu langen Motorstillstandes zu weit absinken, erfolgt die Entleerung des Systems über den Kondensator 13. (z.B. nach Fahrt auf Arbeit oder über Nacht). Eine definierte Restmenge des Arbeitsmediums verbleibt jedoch im Wärmespeicher 10. Diese definierte Restmenge wird zum schnellen Anfahren des Systems bei einem Neustart genutzt.

Ein weiterer Anwendungsfall stellt der Kaltstart der Brennkraftmaschine dar, der nachfolgend beschrieben wird.

Bei Kaltstart des Systems liegt das Arbeitsmedium flüssig und unter Umgebungstemperatur im gesamten System vor. Um ein schnelles Aufwärmen des Arbeitsmediums zu ermöglichen, wird zunächst das Arbeitsmedium aus dem Wärmespeicher 10 nur im kleinen Kreislauf über das Wegeventil 14, der Leitung 24, dem Wegeventil 15, der Rückführleitung 28, dem Wärmeübertrager 7 und dem Wegeventil 17 zurück zum Wegeventil 14 durch die Pumpe 18 gefördert. Im Wärmeübertrager 7 wird dem flüssigen Arbeitsmedium die Wärmeenergie des Abgases zugeführt. Dadurch verdampft das Arbeitsmedium, wodurch sich Dampftemperatur und damit Dampfdruck erhöhen. Entsprechend der erreichten Dampftemperatur und des Dampfdrucks des Arbeitsmediums wird über das erste Wegeventil 17 das dampfförmige Arbeitsmedium bedarfsgerecht entweder vollständig oder teilweise zum Wärmeübertrager 2 oder vollständig oder teilweise zum Wegeventil 14 geleitet. Solange die gewünschte Dampftemperatur und der Dampfdruck noch nicht erreicht sind wird das Arbeitsmedium über das Wegeventil 15 weiter zu dem Wärmeübertrager 7 geleitet. Erst wenn Dampftemperatur und -druck die gewünschten Werte erreichen erfolgt eine Umschaltung der Wegeventile 17, 14 und 15, so dass wieder eine Befüllung des Wärmespeichers 10 und/oder die Zuführung der Arbeitsmediums zum Expanders 11 erfolgt und somit wieder der oben beschriebene normale Betrieb aufgenommen wird. Anschließend beginnt die Pumpe 19 damit, dem Kreislauf neues Arbeitsmedium zuzuführen (normaler Betrieb) und die Rückführung des Arbeitsmediums über die Rückführungsleitung 28 zum Wärmeübertrager 7 wird durch betätigen des Wegeventils 15 abgeschaltet.

### Aufstellung der verwendeten Bezugszeichen

- 1: Brennkraftmaschine
- 2: Wärmeübertrager
- 3: Abgasturbolader
- 4: Vorkatalysator
- 5: Abgasleitung
- 6: Hauptkatalysator
- 7: Wärmeübertrager
- 8: Abgaskrümmer
- 9: Nachschalldämpfer
- 10: Wärmespeicher
- 11: Expander
- 12: Speicher
- 13: Kondensator
- 14: Wegeventil
- 15: Wegeventil
- 16: Regelventil
- 17: Wegeventil
- 18: Pumpe
- 19: Pumpe
- 20: Rückschlagventil
- 21: Leitung
- 22: Leitung
- 22a: Dampfleitung
- 23: Bypassleitung
- 24: Leitung
- 25: Verbindungsleitung
- 26: Dampfleitung
- 27: Bypassleitung
- 28: Rückführleitung
- 29: Leitung
- 30: Leitung
- 31: Verdichter
- 32: Injektor
- 33: Rückführleitung
- 34: Leitung
- 36: Leitung

## Patentansprüche

1. Verfahren zur verbesserten Energieausnutzung der Wärmeenergie von Brennkraftmaschinen bei dem zur Nutzung der Wärmeenergie der Brennkraftmaschine ein Arbeitsmedium durch die Wärmeenergie der Brennkraftmaschine (1) erwärmt wird,
**gekennzeichnet dadurch, dass**
das durch die Abgase der Brennkraftmaschine (1) in einem Wärmeübertrager (7) erwärmte Arbeitsmedium über ein schaltbares erstes Wegeventil (17) wahlweise einem Wärmeübertrager (2) zur Wärmeübertragung der Wärmeenergie der unmittelbar aus der Brennkraftmaschine (1) austretenden heißen Abgase an das Arbeitsmedium zur Kühlung der Bauteile der Brennkraftmaschine (1) und zur gleichzeitigen Überhitzung des Arbeitsmediums und/oder unter teilweiser Umgehung des Wärmetauschers (2) einer der dem Wärmetauscher (2) in Strömungsrichtung des Arbeitsmediums nachgeschalteten Dampfleitung (22a) zugeführt wird.

2. Verfahren nach Anspruch 1,
**dadurch gekennzeichnet, dass**
das von dem Wärmeübertrager (2) kommende überhitzte dampfförmige Arbeitsmedium und/oder das von dem Wärmeübertrager (7) kommende erwärmte Arbeitsmedium über ein zweites schaltbares Wegeventil (14) wahlweise einem Wärmespeicher (10) und/oder über eine Leitung (24) einem dritten schaltbaren Wegeventil (15) zugeführt wird.

3. Verfahren nach einem der Ansprüche 1 oder 2,
**dadurch gekennzeichnet, dass**
über das zweite Wegeventil (14) und der Leitung (24) das im Wärmespeicher (10) gespeicherte Arbeitsmedium dem dritten schaltbaren Wegeventil (15) zugeführt wird.

4. Verfahren nach einem der Ansprüche 1 bis 3,
**dadurch gekennzeichnet, dass**
das dem dritten Wegeventil (15) zugeführte Arbeitsmedium schaltbar wahlweise einem Expander (11) zur Nutzung und Entspannung der im Arbeitsmedium enthaltene Wärmeenergie und/oder einem Kondensator (13) zur Abkühlung des Arbeitsmediums und/oder dem im Abgasstrom der Brennkraftmaschine (1) nach einem Hauptkatalysator (6) befindlichen Wärmeübertrager (7) zugeführt wird.

5. Verfahren nach einem der Ansprüche 1 bis 4,
**dadurch gekennzeichnet, dass**
das im Kondensator (13) abgekühlte Arbeitsmedium über eine Leitung (21) dem Wärmeübertrager (7) zur Wärmeübertragung der Wärmeenergie der den Hauptkatalysator (6) verlassenden Abgase an das Arbeitsmedium zugeführt wird.

6. Verfahren nach einem der Ansprüche 1 bis 5,
**dadurch gekennzeichnet, dass**
das durch den Kondensator (13) vorgewärmte Arbeitsmedium über eine Leitung (29) der Brennkraftmaschine (1) zur Kühlung der Zylinder und/oder des Zylinderkopfes der Brennkraftmaschine (1) und danach über eine Leitung (30) dem Wärmeübertrager (7) zugeführt wird.

7. Verfahren nach einem der Ansprüche 1 bis 6,
**dadurch gekennzeichnet, dass**
das ein Teilstrom des Arbeitsmediums vom Speicher (12) mittels einer Pumpe über einem Injektor (32) dem von der Brennkraftmaschine (1) über die Leitung (30) kommenden Arbeitsmedium nach einem Verdichter (31) zugeführt wird.

8. Verfahren nach einem der Ansprüche 1 bis 7,
**dadurch gekennzeichnet, dass**
im Fahrbetrieb das kalte Arbeitsmedium aus dem Speicher (12) zu dem Wärmeübertrager (7) und das vom Wärmeübertrager (2) kommende überhitzte Arbeitsmedium über die Wegeventile (14, 15) dem Expander (11) und/oder dem Wärmespeicher (10) zugeführt wird.

9. Verfahren nach einem der Ansprüche 1 bis 7,
**dadurch gekennzeichnet, dass**
bei einem Fahrzeugstop mit noch warmer Brennkraftmaschine (1) die Arbeitsmittelzufuhr des kalten Arbeitsmediums aus dem Speicher (12) zu dem Wärmeübertrager (7) unterbrochen wird und das Arbeitsmedium aus dem Wärmespeicher (10) über die Wegeventile (14, 15) dem Wärmeübertrager (7) und über das Wegeventil (17) dem Wärmeübertrager (2) und/oder dem zweiten Wegeventil (14) zugeführt wird.

10. Verfahren nach einem der Ansprüche 1 bis 7,
**dadurch gekennzeichnet, dass**
bei einem Kaltstart der Brennkraftmaschine (1) das Arbeitsmedium aus dem Wärmespeicher (10) über die Wegeventile (14, 15) dem Wärmeübertrager (7) und über das Wegeventil (17) dem Wärmeübertrager (2) und/oder dem zweiten Wegeventil (14) bis zum erreichen der Betriebstemperatur zugeführt wird.

11. Vorrichtung zur verbesserten Energieausnutzung der Wärmeenergie einer Brennkraftmaschine die über Abgaskrümmer (8) mit einer Abgasleitung (5) verbunden ist und bei der im Bereich der Abgaskrümmer (8) ein mit einem Arbeitsmedium durchströmter Wärmeübertrager (2) angeordnet ist, dem in Strömungsrichtung des Arbeitsmediums ein Expander (11) und ein Kondensator (13) nachgeschaltet sind,
**dadurch gekennzeichnet, dass**
in der Abgasleitung (5) nach einem Hauptkatalysator (6) ein Wärmeübertrager (7) angeordnet ist dessen Leitung (34) zur Weiterleitung des Arbeitsmediums mit einem schaltbaren ersten Wegeventil (17) verbunden ist, mit dem die Leitung (34) über eine Leitung (22) mit dem Wärmeübertrager (2) und über eine Dampfleitung (22a) mit einem schaltbaren zweiten Wegeventil (14) und/oder über eine in die Dampfleitung (22a) mündende Bypassleitung (23) mit dem schaltbaren zweiten Wegeventil (14) verbindbar ist.

12. Vorrichtung nach Anspruch 11,
**dadurch gekennzeichnet, dass**
die in das zweite Wegeventil (14) mündende Dampfleitung (22a) durch das schaltbare Wegeventil (14) über eine erste Verbindungsleitung (25) mit einem Wärmespeicher (10) und/oder über eine zweite Leitung (24) mit einem dritten schaltbaren Wegeventil (15) verbindbar ist und/oder über das Wegeventil (14) der Wärmespeicher (10) und/oder die Dampfleitung (22a) über die Leitung (24) mit dem dritten Wegeventil (15) verbindbar ist und die Leitung (24) über das dritte schaltbare Wegeventil (15) über eine Dampfleitung (26) mit dem Expander (11) und/oder über eine Bypassleitung (27) mit dem Kondensator (13) und/oder über eine Rückführleitung (28) mit dem in der Abgasleitung (5) angeordneten Wärmeübertrager (7) verbindbar ist.

13. Vorrichtung nach einem der vorhergehenden Ansprüche,
**dadurch gekennzeichnet, dass**
die in den Kondensator (13) mündende Bypassleitung (27) nach Austritt aus dem Kondensator (13) in einen Speicher (12) mündet und der Speicher (12) mit einer vom Speicher (12) wegführenden Kühlleitung (35) versehen ist die zur Kühlung des Kondensators (13) um den Kondensator (13) angeordnet ist.

14. Vorrichtung nach einem der vorhergehenden Ansprüche,
**dadurch gekennzeichnet, dass**
die Kühlleitung (35) nach dem Kondensator (13) als eine Leitung (21) mit dem Wärmeübertrager (7) verbunden ist, wobei die Rückführleitung (28) und die Leitung (21) vor Eintritt in den Wärmeübertrager (7) miteinander verbunden sind.

15. Vorrichtung nach einem der vorhergehenden Ansprüche,
**dadurch gekennzeichnet, dass**
die Kühlleitung (35) nach dem Kondensator (13) als eine Leitung (29) mit der Brennkraftmaschine (1) zur Kühlung der Zylinder und/oder des Zylinderkopfes der Brennkraftmaschine (1) verbunden ist, die als aus der Brennkraftmaschine (1) austretende Leitung (30) mit dem Wärmeübertrager (7) verbunden ist, wobei die Rückführleitung (28) und die Leitung (30) vor Eintritt in den Wärmeübertrager (7) miteinander verbunden sind und in der Leitung (30) ein Verdichter (31) und in Strömungsrichtung des Arbeitsmediums nach dem Verdichter (31) ein Injektor (32) angeordnet ist, der über eine Leitung (36) mit dem Speicher (12) verbunden ist, und dass in der Leitung (36) eine regelbare Pumpe angeordnet ist.
